# EUROPEAN PATENT SPECIFICATION

(11) **EP 1 511 964 B1**
(45) Date of publication and mention of the grant of the patent: **19.04.2006**
(21) Application number: 03735972.6
(22) Date of filing: 04.06.2003
(51) Int. Cl.: F24H 1/18

(54) **GAS FED WATER-HEATER**
GASBEHEIZTER WASSERKESSEL
CHAUFFE-EAU ALIMENTE AU GAZ

(30) Priority: 07.06.2002 IT MI20021244
(43) Date of publication of application: 09.03.2005
(73) Proprietor: SAES GETTERS S.p.A., Lainate (Milano) (IT)
(72) Inventor: MANINI, Paolo, I-20010 Arluno (IT); DI GREGORIO, Pierattilio, I-67039 Sulmona (IT)
(74) Representative: Adorno, Silvano
(86) International application number: PCT/IT2003/000350
(87) International publication number: WO 2003/104722

(56) References cited:
- WO-A-00/75557
- DE-C- 19 535 265
- US-A- 2 544 927

## Description

The present invention relates to a gas fed water-heater, particularly to a gas fed water-heater provided with a thermoinsulating system placed around the area of the burner to avoid heat losses.

It is known that water-heaters, usually indicated as "heaters", can be fed by gas or electrically. The gas fed water-heaters of accumulation type comprise a generally cylindrical or parallelepiped container wherein a gas burner and a tank containing the water to be heated are placed. The burner generally occupies the lower part of the container and is upperly connected to a heat exchanger disposed across said tank thus heating the water contained therein.

Said container is generally formed of a double wall and in the interspace enclosed therein an insulating material is arranged, necessary to avoid heat losses which obviously would lower the energetic yield of the water-heater. Particularly, in the portion of the interspace adjacent to the tank is usually inserted a polymeric insulator, for example a polyurethanic foam, while in the portion adjacent to the position of the burner, glass wool or rock wool is used as insulating material. Such a water heater is described in US 5421475

However, this type of insulation has the drawback that to ensure a good thermal tightness in the burner area, which has a very high temperature (being capable of reaching 250-300 °C), it is necessary to use a very thick layer of rock wool, thus increasing the total encumbrance of the water-heater or decreasing the capacity.

The object of the present invention is therefore to provide a water-heater provided with a thermoinsulating system capable of efficiently avoiding the heat loss, without increasing the volume of the insulator with respect to the systems utilized up to now. Said object is achieved with a water-heater whose main features are specified in the first claim and other features are specified in the subsequent claims.

It has been found that, by placing a two layers thermoinsulating system according to the present invention at least in the portion of the interspace of a water-heater which is adjacent to the burner, it is possible to improve the insulation of the same water-heater, thus obtaining a power saving of about 10%.

Particularly, the best energetic yield of the water-heater is achieved when said inner layer based on rock wool or glass wool occupies about 70-80% of the volume available for the thermoinsulating system, the remainder volume being occupied by said vacuum panel.

The advantages and the features of the water-heater according to the present invention will be clear to those skilled in the art from the following detailed description of one embodiment thereof with reference to the attached drawings
wherein:
- figure 1 shows a longitudinal sectional view of a water-heater according to this embodiment; and
- figure 2 shows a cross sectional view of the water-heater along line I-I' of figure 1.

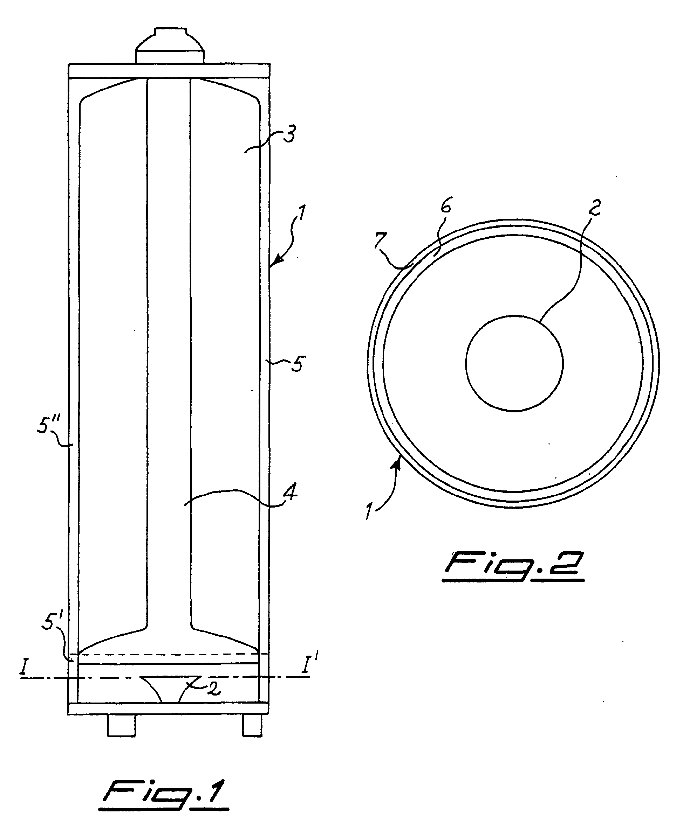

Referring to figure 1, it is shown that the gas fed water-heater according to the present invention comprises in a known way a double wall container 1, cylindrically shaped, inside which a burner 2 and, thereover, a tank 3 of the water to be heated are placed. Burner 2 is upperly connected to a heat exchanger 4 crossing said tank 3 thus heating the water contained therein. The double wall defines an interspace, 5, which lower portion 5' is adjacent to the area occupied by the burner, while the upper portion 5" is adjacent to the area of the tank; the dotted line of the drawing represents the separation between the two portions 5' and 5".

Figure 2 represents a cross section of the water-heater perpendicular to the axis thereof, to the height of portion 5'. As it is shown in figure 2, in the lower area of the interspace is inserted a thermoinsulating system comprising at least two different layers, that is, an inner layer 6, nearer to burner 2, formed of rock wool or glass wool, and an outer layer 7 formed of at least a vacuum thermoinsulating panel.

The panel, comprising plastic materials, could not be placed in direct contact with the wall delimiting the burner, which reaches temperatures higher than 250 °C. Layer 6 has however thermal insulating properties, so that the surface of this layer opposed to the one in contact with the burner is at a lower temperature, that the panel can withstand. In turn, the panel wrapped around layer 6 has higher thermal insulation properties than a layer of glass wool or rock wool, of same thickness of the panel, would have. By wrapping the panel around layer 6, thus, it is obtained a synergic effect, with the inner layer protecting the panel from thermal deterioration, and the panel notably increasing the thermal insulation of the system at the same overall thickness.

The two layers thermoinsulating system could be present even in the portion 5" of the interspace; however since temperatures in this area are lower and do not require insulation of very high efficiency, it is preferable (even for economic reasons) to fill said portion 5" with any known thermoinsulating material, for example a foamed polymeric material. The separation between the portions 5' and 5" of the interspace may be only geometric, or obtained through a separation element.

As it is known, a vacuum thermoinsulating panel is made up of an envelope wherein a filling material is present under vacuum. The envelope has the function of preventing (or reducing as much as possible) the inlet of atmospheric gases inside the panel, so as to keep a vacuum level compatible with the thermoinsulating level required from the application, and is made with so-called "barrier" sheets, characterized by a gas permeability being as low as possible. The filling material has the main function of spacing apart the two opposite faces of the envelope when vacuum is created in the panel, and must have a porous or discontinue internal structure so that the porosities or interstices thereof can be evacuated so as to perform the thermoinsulating duty.

The vacuum panel used in the water-heater according to the present invention comprises, as filling material, an inert material powder having an average size of the particles lower than 100 nanometers, and preferably comprised between 2 and 20 nanometers. As it is known, the thermoinsulating properties of this type of panels vary only slightly as a function of their internal pressure, which can reach some tens of millibar without compromising these properties. For this reasons, the envelope of these panels can advantageously be made up of a plastic material, for example polyolefinic, possibly metallized.

According to a preferred embodiment of the invention, the inert material of the powder is silica preferably mixed with mineral fibers, such as glass fibers, so as to be easily compressed to form boards thick up to some millimeters, which can be bent relatively easily.

The silica used for the invention can be for example precipitated silica, manufactured for example by the German company Degussa GmbH. Preferably, pyrogenic silica is used, a form of silica obtained by burning SiCl₄ with oxygen in a suitable chamber, manufactured and sold for example by the US company CABOT Corp. under the name Nanogel® or by the German company Wacker GmbH.

Possible changes and/or additions may be made by those skilled in the art to the embodiment of the invention here described and illustrated without departing from the scope of the same invention.

## Claims

1. A gas fed water-heater comprising a double wall container (1) inside which a burner (2) and a tank (3) of the water to be heated are arranged, said double wall defining an interspace (5) containing a thermoinsulating system, **characterized in that** said thermoinsulating system comprises, at least in the portion (5') of said interspace adjacent to said burner, an inner layer (6) of rock wool or glass wool and an outer layer (7) formed of at least a vacuum panel comprising an envelope which encloses inert material powder with an average size of the particles lower than 100 nanometers.

2. A water-heater according to claim 1, **characterized in that** in the thermoinsulating system the volume percentage of said inner layer (6) is comprised between 70-80% of the total volume.

3. A water-heater according to claim 1 or 2, **characterized in that** said thermoinsulating system comprising an inner layer of rock wool or glass wool and at least a vacuum panel occupies only the portion (5') of the interspace adjacent to the burner (2).

4. A water-heater according to claim 3, **characterized in that** the portion (5") of the interspace adjacent to said tank (3) is filled with a foamed polymeric material.

5. A water-heater according to one of the previous claims, **characterized in that** the inert material powder has particles with an average size between 2 and 20 nanometers.

6. A water-heater according to one of the previous claims, **characterized in that** said envelope is made up of plastic material possibly metallized.

7. A water-heater according to one of the previous claims, **characterized in that** the inert material powder is mixed with mineral fibers.

8. A water-heater according to claim 7, **characterized in that** said mineral fibers are glass fibers.

9. A water-heater according to one of the previous claims, **characterized in that** the inert material is pyrogenic silica.

## Patentansprüche

1. Ein gasgespeister Wassererhitzer umfassend einen doppelwandigen Behälter (1), in dem ein Brenner (2) und ein Kessel (3) für das zu erhitzende Wasser angeordnet sind, wobei die doppelte Wand einen Zwischenraum (5) definiert, der ein Thermoisolationssystem enthält, **dadurch gekennzeichnet, dass** das Thermoisolationssystem zumindest in dem Bereich (5') dieses Zwischenraums, der zu dem Brenner benachbart ist, eine innere Schicht (6) aus Steinwolle oder Glaswolle und eine äußere Schicht (7) umfasst, die aus mindestens einem Vakuumelement gebildet ist, das eine Ummantelung aufweist, welche ein Pulver aus Inertmaterial mit einer mittleren Partikelgröße von weniger als 100 Nanometern enthält.

2. Wassererhitzer nach Anspruch 1, **dadurch gekennzeichnet, dass** in dem Thermoisolationssystem der Volumenanteil der inneren Schicht (6) zwischen 70 bis 80 % des Gesamtvolumens beträgt.

3. Wassererhitzer nach Anspruch 1 oder 2, **dadurch gekennzeichnet, dass** das Thermoisolationssystem eine innere Schicht aus Steinwolle oder Glaswolle umfasst und mindestens ein Vakuumelement lediglich den Bereich (5') des Zwischenraums, der zu dem Brenner (2) benachbart ist, ausfüllt.

4. Wassererhitzer nach Anspruch 3, **dadurch gekennzeichnet, dass** der Bereich (5") des Zwischenraums, der zu dem Kessel (3) benachbart ist, mit einem geschäumten polymeren Material gefüllt ist.

5. Wassererhitzer nach einem der vorangegangenen Ansprüche, **dadurch gekennzeichnet, dass** das Pulver aus Inertmaterial Teilchen mit einer mittleren Größe von zwischen 2 und 20 Nanometern enthält.

6. Wassererhitzer nach einem der vorangegangenen Ansprüche, **dadurch gekennzeichnet, dass** die Ummantelung aus gegebenenfalls metallisiertem Kunststoffmaterial gemacht ist.

7. Wassererhitzer nach einem der vorangegangenen Ansprüche, **dadurch gekennzeichnet, dass** das Pulver aus Inertmaterial mit mineralischen Fasern vermischt ist.

8. Wassererhitzer nach Anspruch 7, **dadurch gekennzeichnet, dass** die Mineralfasern Glasfasern sind.

9. Wassererhitzer nach einem der vorangegangenen Ansprüche, **dadurch gekennzeichnet, dass** das Inertmaterial pyrogenes Siliciumdioxid ist.

## Revendications

1. Chauffe-eau alimenté au gaz comprenant un récipient à double paroi (1) à l'intérieur duquel un brûleur (2) et un réservoir (3) d'eau à chauffer sont arrangés, ladite double paroi définissant un espace intermédiaire (5) contenant un système thermo-isolant, **caractérisé en ce que** ledit système thermo-isolant comprend au moins dans la partie (5') dudit espace intermédiaire adjacent audit brûleur une couche interne (6) de laine de roche ou de laine de verre et une couche externe (7) formée d'au moins un panneau à vide comprenant une enveloppe qui enferme une poudre en matériau inerte présentant une taille moyenne de particule inférieure à 100 nanomètres.

2. Chauffe-eau selon la revendication 1, **caractérisé en ce que** dans le système thermo-isolant, le pourcentage en volume de ladite couche interne (6) est compris entre 70 et 80% du volume total.

3. Chauffe-eau selon la revendication 1 ou 2, **caractérisé en ce que** ledit système thermo-isolant comprenant une couche interne de laine de roche ou de laine de verre et au moins un panneau à vide occupe uniquement la partie (5') de l'espace intermédiaire adjacent au brûleur (2).

4. Chauffe-eau selon la revendication 3, **caractérisé en ce que** la partie (5") de l'espace intermédiaire adjacent audit réservoir (3) est remplie d'un matériau polymérique sous forme de mousse.

5. Chauffe-eau selon l'une quelconque des revendications précédentes, **caractérisé en ce que** la poudre en matériau inerte présente des particules avec une taille moyenne comprise entre 2 et 20 nanomètres.

6. Chauffe-eau selon l'une quelconque des revendications précédentes, **caractérisé en ce que** ladite enveloppe est composée de matériau plastique pouvant être métallisé.

7. Chauffe-eau selon l'une quelconque des revendications précédentes, **caractérisé en ce que** la poudre en matériau inerte est mélangée avec des fibres minérales.

8. Chauffe-eau selon la revendication 7, **caractérisé en ce que** lesdites fibres minérales sont des fibres de verre.

9. Chauffe-eau selon l'une quelconque des revendications précédentes, **caractérisé en ce que** le matériau inerte est une silice pyrogénée.
